# EUROPEAN PATENT APPLICATION

(11) **EP 4 797 201 A1**
(43) Date of publication of application: **26.08.2026**
(21) Application number: 24878757.4
(22) Date of filing: 13.09.2024
(51) Int. Cl.: G06T 5/70

(54) **IMAGE PROCESSING METHOD AND APPARATUS, STORAGE MEDIUM, AND ELECTRONIC DEVICE**

(30) Priority: 19.10.2023 CN 202311361371
(71) Applicant: Huizhou TCL Cloud Internet Corporation Technology Co., Ltd., Huizhou, Guangdong 516006 (CN)
(72) Inventor: XU, Nan, Huizhou, Guangdong 516006 (CN)
(74) Representative: Murgitroyd & Company
(86) International application number: PCT/CN2024/118907
(87) International publication number: WO 2025/082108

(57) **Abstract**

The present application relates to the technical field of computers, and discloses an image processing method and apparatus, a storage medium, and an electronic device. The method comprises: segmenting a plurality of image frames to be processed, to obtain motion regions and non-motion regions; performing multi-frame noise reduction processing on the non-motion regions; using a preset noise reduction model to perform noise reduction processing on a target motion region among the motion regions; and fusing a noise-reduced motion region and a noise-reduced non-motion region to obtain a processed image. The present application improves both image quality effect and image processing performance.

## Description

This application claims priority to Chinese Application No. 2023113613718 on October 19, 2023, entitled "IMAGE PROCESSING METHOD AND APPARATUS, STORAGE MEDIUM, AND ELECTRONIC DEVICE", the contents of which are incorporated herein by reference in their entirety.

### FIELD OF THE INVENTION

The present disclosure relates to the field of computer technologies, and in particular to an image processing method, an apparatus, a storage medium, and an electronic device.

### BACKGROUND

In image quality processing, there exist some conventional denoising processing methods and AI model-based denoising methods. Among them, the conventional denoising processing methods generally have unsatisfactory processing effects on a motion region in an image, and often cause the motion region to become blurred. The AI model-based denoising methods may suffer from slow processing speed and poor processing performance.

### Technical Problem

The existing image denoising processing methods have a problem in that image quality improvement and processing performance cannot be effectively balanced.

### SUMMARY

The embodiments of the present disclosure provide an image denoising processing solution, which can effectively balance improvement of image quality and image processing performance.

The embodiments of the present disclosure provide the following technical solutions:

According to an embodiment of the present disclosure, an image processing method is provided, which comprises: segmenting multiple frames of to-be-processed images to obtain, for each frame of the to-be-processed images, a motion region and a non-motion region corresponding to each frame of the to-be-processed images; performing multi-frame denoising processing on the non-motion region corresponding to the multiple frames of the to-be-processed images to obtain a denoised non-motion region; performing denoising processing on a target motion region in the motion region corresponding to the multiple frames of the to-be-processed images by using a preset denoising model to obtain a denoised motion region; and fusing the denoised motion region and the denoised non-motion region to obtain a processed image.

In some embodiments of the present disclosure, before performing the denoising processing on the target motion region in the motion region corresponding to the multiple frames of the to-be-processed images by using the preset denoising model to obtain the denoised motion region, the method further comprises: performing image quality detection on the motion region corresponding to the multiple frames of the to-be-processed images to obtain image quality information corresponding to each motion region; and screening, from the motion region corresponding to the multiple frames of the to-be-processed images, one motion region that meets a predetermined image quality condition as the target motion region.

In some embodiments of the present disclosure, the screening, from the motion region corresponding to the multiple frames of the to-be-processed images, one motion region that meets the predetermined image quality condition as the target motion region comprises: sorting the motion region corresponding to the multiple frames of the to-be-processed images according to the image quality information in an order from high to low; and selecting a motion region ranked first according to the sorting to obtain the target motion region.

In some embodiments of the present disclosure, the screening, from the motion region corresponding to the multiple frames of the to-be-processed images, one motion region that meets the predetermined image quality condition as the target motion region comprises: obtaining image quality information of the denoised non-motion region; performing analysis processing based on the image quality information of the denoised non-motion region and the image quality information of the motion region corresponding to the multiple frames of the to-be-processed images to obtain an image quality matching degree between the denoised non-motion region and each motion region; and screening, based on the image quality matching degree between the denoised non-motion region and each motion region, a motion region whose image quality matching degree meets a predetermined matching condition as the target motion region.

In some embodiments of the present disclosure, the performing analysis processing based on the image quality information of the denoised non-motion region and the image quality information of the motion region corresponding to the multiple frames of the to-be-processed images to obtain the image quality matching degree between the denoised non-motion region and each motion region comprises: calculating, based on the image quality information of the denoised non-motion region, a first image quality score of the denoised non-motion region; calculating, based on the image quality information of the motion region corresponding to each frame of the to-be-processed images, a second image quality score of the motion region corresponding to each frame of the to-be-processed images; and calculating a difference between the first image quality score of the denoised non-motion region and the second image quality score of the motion region corresponding to each frame of the to-be-processed images to obtain the image quality matching degree between the denoised non-motion region and each motion region.

In some embodiments of the present disclosure, the screening, based on the image quality matching degree between the denoised non-motion region and each motion region, the motion region whose image quality matching degree meets the predetermined matching condition as the target motion region comprises: determining, based on the image quality matching degree between the denoised non-motion region and each motion region, whether there exists an image quality matching degree within a predetermined matching interval; and if yes, determining, according to the motion region corresponding to the image quality matching degree within the predetermined matching interval, the target motion region.

In some embodiments of the present disclosure, the performing denoising processing on the target motion region in the motion region corresponding to the multiple frames of the to-be-processed images by using the preset denoising model to obtain the denoised motion region comprises one of the following: inputting the target motion region into a first denoising model to obtain the denoised motion region; or inputting the target motion region and the image quality information of the denoised non-motion region into a second denoising model to obtain the denoised motion region.

According to an embodiment of the present disclosure, an image processing apparatus is provided, the apparatus comprising: a segmentation module configured to segment multiple frames of to-be-processed images to obtain, for each frame of the to-be-processed images, a motion region and a non-motion region corresponding to each frame of the to-be-processed images; a first denoising module configured to perform multi-frame denoising processing on the non-motion region corresponding to the multiple frames of the to-be-processed images to obtain a denoised non-motion region; a second denoising module configured to perform denoising processing on a target motion region in the motion region corresponding to the multiple frames of the to-be-processed images by using a preset denoising model to obtain a denoised motion region; and a fusion module configured to fuse the denoised motion region and the denoised non-motion region to obtain a processed image.

In some embodiments of the present disclosure, before the second denoising module performs the denoising processing on the target motion region in the motion region corresponding to the multiple frames of the to-be-processed images by using the preset denoising model to obtain the denoised motion region, the apparatus further comprises a screening module configured to: perform image quality detection on the motion region corresponding to the multiple frames of the to-be-processed images to obtain image quality information corresponding to each motion region; and screen, from the motion region corresponding to the multiple frames of the to-be-processed images, one motion region that meets a predetermined image quality condition as the target motion region.

In some embodiments of the present disclosure, the screening module is configured to: sort the motion region corresponding to the multiple frames of the to-be-processed images according to the image quality information in an order from high to low; and select a motion region ranked first according to the sorting to obtain the target motion region.

In some embodiments of the present disclosure, the screening module is configured to: obtain image quality information of the denoised non-motion region; perform analysis processing based on the image quality information of the denoised non-motion region and the image quality information of the motion region corresponding to the multiple frames of the to-be-processed images to obtain an image quality matching degree between the denoised non-motion region and each motion region; and screen, based on the image quality matching degree between the denoised non-motion region and each motion region, a motion region whose image quality matching degree meets a predetermined matching condition as the target motion region.

In some embodiments of the present disclosure, the screening module is configured to: calculate, based on the image quality information of the denoised non-motion region, a first image quality score of the denoised non-motion region; calculate, based on the image quality information of the motion region corresponding to each frame of the to-be-processed images, a second image quality score of the motion region corresponding to each frame of the to-be-processed images; and calculate a difference between the first image quality score of the denoised non-motion region and the second image quality score of the motion region corresponding to each frame of the to-be-processed images to obtain the image quality matching degree between the denoised non-motion region and each motion region.

In some embodiments of the present disclosure, the screening module is configured to: determine, based on the image quality matching degree between the denoised non-motion region and each motion region, whether there exists an image quality matching degree within a predetermined matching interval; and if yes, determine, according to the motion region corresponding to the image quality matching degree within the predetermined matching interval, the target motion region.

In some embodiments of the present disclosure, the second denoising module is configured to perform one of the following: input the target motion region into a first denoising model to obtain the denoised motion region; or input the target motion region and the image quality information of the denoised non-motion region into a second denoising model to obtain the denoised motion region.

According to another embodiment of the present disclosure, a storage medium is provided, wherein the storage medium stores a computer program, and when the computer program is executed by a processor of a computer, the computer is caused to perform the method according to the embodiments of the present disclosure.

According to another embodiment of the present disclosure, an electronic device is provided, which may comprise: a memory storing a computer program; and a processor configured to read the computer program stored in the memory and execute the method according to the embodiments of the present disclosure.

According to another embodiment of the present disclosure, a computer program product or a computer program is provided, the computer program product or the computer program comprising computer instructions, the computer instructions being stored in a computer-readable storage medium. A processor of a computer device reads the computer instructions from the computer-readable storage medium, and executes the computer instructions to cause the computer device to perform the method provided in various optional implementations of the embodiments of the present disclosure.

### Advantageous Effects

In the embodiments of the present disclosure, multiple frames of to-be-processed images are segmented to obtain, for each frame of the to-be-processed images, a motion region and a non-motion region corresponding to each frame of the to-be-processed images; multi-frame denoising processing is performed on the non-motion region corresponding to the multiple frames of the to-be-processed images to obtain a denoised non-motion region; denoising processing is performed on a target motion region in the motion region corresponding to the multiple frames of the to-be-processed images by using a preset denoising model to obtain a denoised motion region; and the denoised motion region and the denoised non-motion region are fused to obtain a processed image.

In this manner, by segmenting the multiple frames of the to-be-processed images into the motion region and the non-motion region respectively, on one hand, the multi-frame denoising processing is performed on the non-motion region corresponding to the multiple frames of the to-be-processed images to obtain the denoised non-motion region, and by performing the multi-frame denoising processing on the non-motion region without processing the motion region, phenomena such as blurring of the motion region are avoided; on the other hand, the denoising processing is performed on the target motion region in the motion region corresponding to the multiple frames of the to-be-processed images by using the preset denoising model to obtain the denoised motion region, and the denoising model processes only the motion region without processing the non-motion region, thereby reducing processing pressure and improving the processing effect of the motion region; then, by fusing the denoised motion region and the denoised non-motion region, a processed image with good denoising effect can be obtained, and overall image processing performance is effectively improved. Accordingly, overall, improvement of image quality and image processing performance can be effectively balanced.

### BRIEF DESCRIPTION OF THE DRAWINGS

In order to more clearly illustrate the technical solutions in the embodiments of the present disclosure, the drawings to be used in the description of the embodiments are briefly introduced below. It is obvious that the drawings in the following description merely show some embodiments of the present disclosure. For those skilled in the art, other drawings can also be obtained based on these drawings without any inventive effort.
FIG. 1 is a flowchart of an image processing method according to an embodiment of the present disclosure.
FIG. 2 is a schematic diagram of motion region detection according to an embodiment of the present disclosure.
FIG. 3 is a schematic diagram of a motion region according to an embodiment of the present disclosure.
FIG. 4 is a schematic diagram of a non-motion region according to an embodiment of the present disclosure.
FIG. 5 is a block diagram of an image processing apparatus according to an embodiment of the present disclosure.
FIG. 6 is a block diagram of an electronic device according to an embodiment of the present disclosure.

### DETAILED DESCRIPTION OF EMBODIMENTS

The present disclosure will be further described in detail below with reference to the accompanying drawings and embodiments. It should be understood that the embodiments provided herein are merely used to explain the present disclosure and are not intended to limit the present disclosure. In addition, the embodiments provided below are only some embodiments for implementing the present disclosure, rather than all embodiments for implementing the present disclosure. Technical solutions recorded in the embodiments of the present disclosure may be implemented in any combination, provided that no conflict exists.

It should be noted that, in the embodiments of the present disclosure, the terms "comprise," "include," or any other variants thereof are intended to cover a non-exclusive inclusion, such that a method or an apparatus comprising a series of elements not only includes those elements explicitly listed, but also includes other elements not explicitly listed, or further includes elements inherent to the implementation of the method or the apparatus. Without further limitations, an element defined by the phrase "comprising a/an ..." does not exclude the presence of additional related elements in the method or the apparatus that comprises the element (for example, steps in the method or units in the apparatus, wherein the units may include partial circuits, partial processors, partial programs, or software, etc.).

For example, the image processing method provided in the embodiments of the present disclosure comprises a series of steps; however, the image processing method provided in the embodiments of the present disclosure is not limited to the steps explicitly described. Similarly, the image processing apparatus provided in the embodiments of the present disclosure comprises a series of units; however, the apparatus provided in the embodiments of the present disclosure is not limited to including only the explicitly described units, and may further include units required for acquiring relevant information or performing processing based on the information.

Unless otherwise defined, all technical and scientific terms used herein have the same meanings as commonly understood by those skilled in the technical field to which the present disclosure belongs. The terms used herein are only for the purpose of describing specific embodiments and are not intended to limit the present disclosure.

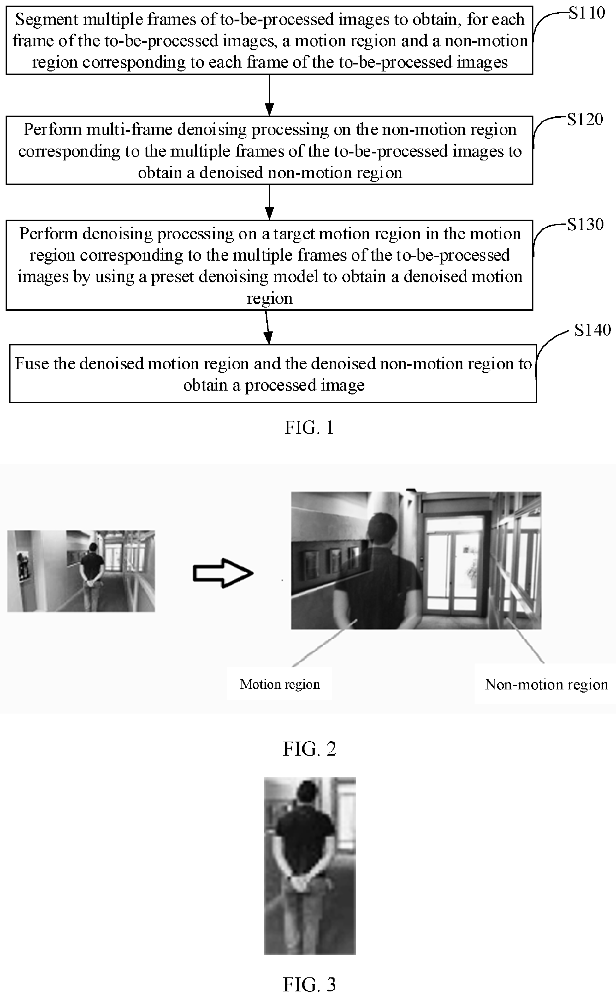

FIG. 1 illustrates a flowchart of an image processing method according to an embodiment of the present disclosure. An execution entity of the image processing method may be any device and/or server having processing capability. The device may include, for example, a television, a computer, a mobile phone, a smart watch, or a household appliance, and the server may include, for example, a cloud server, a physical server, or a server cluster.

As shown in FIG. 1, the image processing method may comprise step S110 to step S140.

Step S110: segmenting multiple frames of to-be-processed images to obtain, for each frame of the to-be-processed images, a motion region and a non-motion region corresponding to each frame of the to-be-processed images; Step S120: performing multi-frame denoising processing on the non-motion region corresponding to the multiple frames of the to-be-processed images to obtain a denoised non-motion region; Step S130: performing denoising processing on a target motion region in the motion region corresponding to the multiple frames of the to-be-processed images by using a preset denoising model to obtain a denoised motion region; Step S140: fusing the denoised motion region and the denoised non-motion region to obtain a processed image.

The multiple frames of to-be-processed images are generally multiple frames of images continuously captured, for example, multiple frames of images captured in burst mode or multiple consecutive frames in a video. A number of frames of the multiple frames of to-be-processed images may be set according to actual requirements, and is not specifically limited in the present disclosure.

A motion region and a non-motion region in each frame of the to-be-processed images may be detected by using a motion detection method. For example, as shown in FIG. 2, for one frame of the to-be-processed images shown in FIG. 2, the motion region and the non-motion region may be detected by using the motion detection method, wherein the motion region is a region in the image where a dynamic object is located, and the non-motion region is a region in the image where a static object is located.

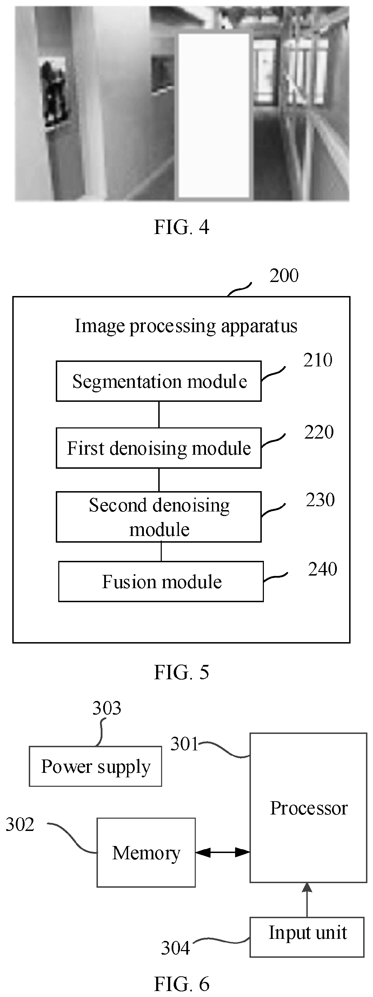

Further, the detected motion region and non-motion region may be segmented from each frame of the to-be-processed images to obtain the motion region and the non-motion region corresponding to each frame of the to-be-processed images. As shown in FIG. 3, the image shown in FIG. 3 is the motion region segmented from the to-be-processed image shown in FIG. 2, and as shown in FIG. 4, the image shown in FIG. 4 is the non-motion region segmented from the to-be-processed image shown in FIG. 2.

Multi-frame denoising processing is performed on multiple non-motion regions (i.e., the non-motion region corresponding to the multiple frames of the to-be-processed images) to obtain the denoised non-motion region, wherein the denoised non-motion region is a non-motion region after denoising processing. Specifically, multiple non-motion regions may be aligned to obtain a pixel correspondence relationship among the multiple non-motion regions; then, corresponding pixels among the multiple non-motion regions are subjected to weighted averaging to obtain one denoised non-motion region.

Denoising processing is performed on one target motion region among multiple motion regions (i.e., the motion region corresponding to the multiple frames of the to-be-processed images) by using a preset denoising model to obtain the denoised motion region, wherein the denoised motion region is a motion region after denoising processing. The preset denoising model is a pre-trained artificial intelligence (AI) model based on deep learning. The target motion region is input into the preset denoising model, and the preset denoising model outputs the denoised motion region after denoising processing.

Finally, the denoised motion region and the denoised non-motion region are fused into one image, and the fused image is the processed image, in which image quality is effectively improved.

In this manner, based on steps S110 to S140, by segmenting the multiple frames of the to-be-processed images into the motion region and the non-motion region respectively, on one hand, multi-frame denoising processing is performed on the non-motion region corresponding to the multiple frames of the to-be-processed images to obtain the denoised non-motion region, and by performing the multi-frame denoising processing on the non-motion region without processing the motion region, phenomena such as blurring of the motion region are avoided; on the other hand, denoising processing is performed on the target motion region in the motion region corresponding to the multiple frames of the to-be-processed images by using the preset denoising model to obtain the denoised motion region, and the denoising model processes only the motion region without processing the non-motion region, thereby reducing processing pressure and improving the processing effect of the motion region; then, by fusing the denoised motion region and the denoised non-motion region, a processed image with good denoising effect can be obtained, and overall image processing performance is effectively improved. Accordingly, overall, improvement of image quality and image processing performance can be effectively balanced.

Further optional specific embodiments of respective steps performed in the image processing according to the embodiment of FIG. 1 are described below.

In one embodiment, before performing the denoising processing on the target motion region in the motion region corresponding to the multiple frames of the to-be-processed images by using the preset denoising model to obtain the denoised motion region, the method may further comprise: randomly selecting one motion region from multiple motion regions (i.e., the motion region corresponding to the multiple frames of the to-be-processed images) as the target motion region; or selecting, from the multiple motion regions (i.e., the motion region corresponding to the multiple frames of the to-be-processed images), one motion region closest to a center of the to-be-processed images as the target motion region.

Further, in one embodiment, before performing the denoising processing on the target motion region in the motion region corresponding to the multiple frames of the to-be-processed images by using the preset denoising model to obtain the denoised motion region, the method further comprises: performing image quality detection on the motion region corresponding to the multiple frames of the to-be-processed images to obtain image quality information corresponding to each motion region; and screening, from the motion region corresponding to the multiple frames of the to-be-processed images, one motion region that meets a predetermined image quality condition as the target motion region.

Image quality detection is performed on the multiple motion regions (i.e., the motion region corresponding to the multiple frames of the to-be-processed images) to obtain image quality information corresponding to each motion region. The image quality information may include image quality-related information such as contrast, color depth, resolution, and the like.

From the multiple motion regions (i.e., the motion region corresponding to the multiple frames of the to-be-processed images), one motion region that meets the predetermined image quality condition is screened as the target motion region. The target motion region is input into the preset denoising model for denoising processing to obtain the denoised motion region, thereby ensuring that a denoised motion region with good image quality effect is obtained.

In one embodiment, the screening, from the motion region corresponding to the multiple frames of the to-be-processed images, one motion region that meets the predetermined image quality condition as the target motion region may comprise: sorting the motion region corresponding to the multiple frames of the to-be-processed images according to the image quality information in an order from high to low; and selecting a motion region ranked first according to the sorting to obtain the target motion region.

In this embodiment, the multiple motion regions (i.e., the motion region corresponding to the multiple frames of the to-be-processed images) are sorted according to the image quality from high to low, and then the motion region ranked first is selected as the target motion region, thereby optimally ensuring the image quality effect of the denoised motion region.

Further, in one embodiment, the screening, from the motion region corresponding to the multiple frames of the to-be-processed images, one motion region that meets the predetermined image quality condition as the target motion region comprises: obtaining image quality information of the denoised non-motion region; performing analysis processing based on the image quality information of the denoised non-motion region and the image quality information of the motion region corresponding to the multiple frames of the to-be-processed images to obtain an image quality matching degree between the denoised non-motion region and each motion region; and screening, based on the image quality matching degree between the denoised non-motion region and each motion region, a motion region whose image quality matching degree meets a predetermined matching condition as the target motion region.

In this embodiment, the image quality information of the denoised non-motion region obtained after multi-frame denoising processing is acquired to analyze the image quality matching degree between the denoised non-motion region and each motion region. Then, a motion region whose image quality matching degree meets the predetermined matching condition is selected as the target motion region. The denoised motion region obtained after the target motion region is input into the preset denoising model has good image quality matching with the denoised non-motion region, such that, after fusing the denoised motion region and the denoised non-motion region, the overall image quality of the processed image is improved and overall image quality uniformity is relatively good.

In one embodiment, the performing analysis processing based on the image quality information of the denoised non-motion region and the image quality information of the motion region corresponding to the multiple frames of the to-be-processed images to obtain the image quality matching degree between the denoised non-motion region and each motion region comprises:

calculating, based on the image quality information of the denoised non-motion region, a first image quality score of the denoised non-motion region; calculating, based on the image quality information of the motion region corresponding to each frame of the to-be-processed images, a second image quality score of the motion region corresponding to each frame of the to-be-processed images; and calculating a difference between the first image quality score of the denoised non-motion region and the second image quality score of the motion region corresponding to each frame of the to-be-processed images to obtain the image quality matching degree between the denoised non-motion region and each motion region.

A weighted sum of multi-dimensional information (such as resolution, contrast, and other dimensions) in the image quality information of the denoised non-motion region may be calculated, and the obtained weighted sum may be used as the first image quality score of the denoised non-motion region. For example, dimension information such as dimension A information and dimension B information in the image quality information of the denoised non-motion region may be mapped, according to a predetermined mapping relationship, to corresponding dimension scores A-1, B-1, and the like. A corresponding weighting coefficient may be preset for each dimension, and the weighted sum is calculated based on the dimension scores corresponding to the multi-dimensional information and the weighting coefficients to obtain the weighted sum. Similarly, based on the image quality information of the motion region corresponding to each frame of the to-be-processed images, the second image quality score of the motion region corresponding to each frame of the to-be-processed images may be calculated.

Then, a difference between the first image quality score of the denoised non-motion region and the second image quality score of the motion region corresponding to each frame of the to-be-processed images may be calculated. For example, a difference between a first image quality score Q of the denoised non-motion region and a second image quality score of a motion region H1 may be calculated as Q-H1, and a difference between the first image quality score Q of the denoised non-motion region and a second image quality score of a motion region H2 may be calculated as Q-H2.

The calculated difference is used as the image quality matching degree between the denoised non-motion region and the motion region, which can effectively reflect a degree of image quality difference between the motion region and the denoised non-motion region. Based on the image quality matching degree, a motion region that meets the predetermined matching condition can be accurately screened as the target motion region.

In one embodiment, the screening, based on the image quality matching degree between the denoised non-motion region and each motion region, the motion region whose image quality matching degree meets the predetermined matching condition as the target motion region comprises: determining, based on the image quality matching degree between the denoised non-motion region and each motion region, whether there exists an image quality matching degree within a predetermined matching interval; and if yes, determining, according to the motion region corresponding to the image quality matching degree within the predetermined matching interval, the target motion region.

A predetermined matching interval is preset. After the image quality matching degree is calculated, it is determined whether there exists an image quality matching degree within the predetermined matching interval. If yes, the motion region corresponding to the image quality matching degree within the predetermined matching interval may be obtained.

If the motion region corresponding to the image quality matching degree within the predetermined matching interval is one, the motion region is used as the target motion region. If the motion region corresponding to the image quality matching degree within the predetermined matching interval is at least two, a motion region corresponding to a maximum matching degree is used as the target motion region. In this case, when the difference is used as the image quality matching degree, the maximum matching degree corresponds to a minimum value of the image quality matching degree.

By presetting the predetermined matching interval, a motion region corresponding to the image quality matching degree within the predetermined matching interval can, after being processed by the preset denoising model, obtain a denoised motion region having very good image quality matching with the denoised non-motion region. After fusing the denoised motion region and the denoised non-motion region, the processed image has improved overall image quality and very good overall image quality uniformity.

In one embodiment, the preset denoising model may comprise a first denoising model or a second denoising model. The performing denoising processing on the target motion region in the motion region corresponding to the multiple frames of the to-be-processed images by using the preset denoising model to obtain the denoised motion region comprises one of the following:

In a first manner, inputting the target motion region into the first denoising model to obtain the denoised motion region;

In a second manner, inputting the target motion region and image data of the denoised non-motion region into the second denoising model to obtain the denoised motion region.

In the first manner, only the target motion region is input into the first denoising model for denoising processing, such that processing pressure of the first denoising model is minimized. In particular, when the target motion region meeting the predetermined image quality matching condition is obtained, after the target motion region is input into the first denoising model, a denoised motion region having good image quality effect and excellent image quality matching with the denoised non-motion region can be efficiently obtained.

The first denoising model may be trained as follows: obtaining a first training set, wherein the first training set comprises motion region samples and denoised motion region samples corresponding to the motion region samples; performing denoising processing on the motion region samples by using the first denoising model to obtain processed motion region samples; calculating a loss based on the denoised motion region samples and the processed motion region samples; and updating parameters of the first denoising model based on the loss through back propagation. The above steps are iteratively performed to continuously update the parameters of the first denoising model until a predetermined termination condition is satisfied, thereby obtaining a trained first denoising model.

In the second manner, the target motion region and image quality information of the denoised non-motion region are input into the second denoising model. The second denoising model performs denoising processing on the target motion region based on the target motion region and the image quality information of the denoised non-motion region, thereby obtaining a denoised motion region having good image quality matching with the denoised non-motion region.

The second denoising model may be trained as follows: obtaining a second training set, wherein the second training set comprises motion region samples, denoised motion region samples corresponding to the motion region samples, and image quality information samples of the denoised non-motion region; performing denoising processing on the motion region samples based on the image quality information samples and the motion region samples by using the second denoising model to obtain processed motion region samples; calculating a loss based on the denoised motion region samples and the processed motion region samples; and updating parameters of the second denoising model based on the loss through back propagation. The above steps are iteratively performed to continuously update the parameters of the second denoising model until a predetermined termination condition is satisfied, thereby obtaining a trained second denoising model.

In order to facilitate better implementation of the image processing method provided in the embodiments of the present disclosure, the embodiments of the present disclosure further provide an image processing apparatus based on the above image processing method. Meanings of terms are the same as those in the above image processing method, and specific implementation details may refer to the description in the method embodiments. FIG. 5 illustrates a block diagram of an image processing apparatus according to an embodiment of the present disclosure.

As shown in FIG. 5, an image processing apparatus 200 may comprise: a segmentation module 210 configured to segment multiple frames of to-be-processed images to obtain, for each frame of the to-be-processed images, a motion region and a non-motion region corresponding to each frame of the to-be-processed images; a first denoising module 220 configured to perform multi-frame denoising processing on the non-motion region corresponding to the multiple frames of the to-be-processed images to obtain a denoised non-motion region; a second denoising module 230 configured to perform denoising processing on a target motion region in the motion region corresponding to the multiple frames of the to-be-processed images by using a preset denoising model to obtain a denoised motion region; and a fusion module 240 configured to fuse the denoised motion region and the denoised non-motion region to obtain a processed image.

In some embodiments of the present disclosure, before the second denoising module performs the denoising processing on the target motion region in the motion region corresponding to the multiple frames of the to-be-processed images by using the preset denoising model to obtain the denoised motion region, the apparatus further comprises a screening module configured to: perform image quality detection on the motion region corresponding to the multiple frames of the to-be-processed images to obtain image quality information corresponding to each motion region; and screen, from the motion region corresponding to the multiple frames of the to-be-processed images, one motion region that meets a predetermined image quality condition as the target motion region.

In some embodiments of the present disclosure, the screening module is configured to: sort the motion region corresponding to the multiple frames of the to-be-processed images according to the image quality information in an order from high to low; and select a motion region ranked first according to the sorting to obtain the target motion region.

In some embodiments of the present disclosure, the screening module is configured to: obtain image quality information of the denoised non-motion region; perform analysis processing based on the image quality information of the denoised non-motion region and the image quality information of the motion region corresponding to the multiple frames of the to-be-processed images to obtain an image quality matching degree between the denoised non-motion region and each motion region; and screen, based on the image quality matching degree between the denoised non-motion region and each motion region, a motion region whose image quality matching degree meets a predetermined matching condition as the target motion region.

In some embodiments of the present disclosure, the screening module is configured to: calculate, based on the image quality information of the denoised non-motion region, a first image quality score of the denoised non-motion region; calculate, based on the image quality information of the motion region corresponding to each frame of the to-be-processed images, a second image quality score of the motion region corresponding to each frame of the to-be-processed images; and calculate a difference between the first image quality score of the denoised non-motion region and the second image quality score of the motion region corresponding to each frame of the to-be-processed images to obtain the image quality matching degree between the denoised non-motion region and each motion region.

In some embodiments of the present disclosure, the screening module is configured to: determine, based on the image quality matching degree between the denoised non-motion region and each motion region, whether there exists an image quality matching degree within a predetermined matching interval; and if yes, determine, according to the motion region corresponding to the image quality matching degree within the predetermined matching interval, the target motion region.

In some embodiments of the present disclosure, the second denoising module is configured to perform one of the following: input the target motion region into a first denoising model to obtain the denoised motion region; or input the target motion region and the image quality information of the denoised non-motion region into a second denoising model to obtain the denoised motion region.

It should be noted that, although several modules or units for performing actions are mentioned in the above detailed description, such division is not mandatory. In fact, according to the embodiments of the present disclosure, features and functions of two or more modules or units described above may be embodied in one module or unit. Conversely, features and functions of one module or unit described above may be further divided and embodied by multiple modules or units.

In addition, the embodiments of the present disclosure further provide an electronic device. As shown in FIG. 6, FIG. 6 illustrates a block diagram of an electronic device according to an embodiment of the present disclosure. Specifically:

The electronic device may comprise a processor 301 having one or more processing cores, a memory 302 including one or more computer-readable storage media, a power supply 303, and an input unit 304, and the like. Those skilled in the art can understand that the structure of the electronic device shown in FIG. 6 does not constitute a limitation on the electronic device, and may include more or fewer components than those illustrated, or may combine certain components, or may adopt different component arrangements.

The processor 301 is a control center of the electronic device, and is configured to connect various parts of the entire electronic device through various interfaces and lines, and execute various functions of the electronic device and perform data processing by running or executing software programs and/or modules stored in the memory 302, and by invoking data stored in the memory 302, thereby performing overall monitoring of the electronic device. Optionally, the processor 301 may comprise one or more processing cores. Preferably, the processor 301 may integrate an application processor and a modem processor, wherein the application processor mainly processes an operating system, a user interface, and application programs, and the modem processor mainly processes wireless communication. It should be understood that the above modem processor may also not be integrated into the processor 301.

The memory 302 may be configured to store software programs and modules, and the processor 301 executes various functional applications and data processing by running the software programs and modules stored in the memory 302. The memory 302 may mainly comprise a program storage area and a data storage area, wherein the program storage area may store an operating system and application programs required for at least one function (such as an audio playback function, an image playback function, etc.), and the data storage area may store data created according to the use of the electronic device. In addition, the memory 302 may include a high-speed random access memory and may also include a non-volatile memory, such as at least one magnetic disk storage device, a flash memory device, or other non-volatile solid-state storage devices. Correspondingly, the memory 302 may further include a memory controller to provide access of the processor 301 to the memory 302.

The electronic device further comprises a power supply 303 configured to supply power to various components. Preferably, the power supply 303 may be logically connected to the processor 301 through a power management system, so that functions such as charge management, discharge management, and power consumption management are implemented through the power management system. The power supply 303 may further include one or more of a direct current power supply, an alternating current power supply, a rechargeable system, a power failure detection circuit, a power converter or inverter, and a power status indicator.

The electronic device may further comprise an input unit 304, wherein the input unit 304 is configured to receive input digital or character information and generate signal inputs related to user settings and function control, such as signals of a keyboard, a mouse, a joystick, optical input, or a trackball.

Although not shown, the electronic device may further comprise a display unit and the like, which are not described herein again. In this embodiment, the processor 301 in the electronic device loads executable files corresponding to one or more computer programs into the memory 302 according to the following instructions, and runs the computer programs stored in the memory 302, thereby implementing various functions described in the foregoing embodiments of the present disclosure. For example, the processor 301 may execute the following steps:

segmenting multiple frames of to-be-processed images to obtain, for each frame of the to-be-processed images, a motion region and a non-motion region corresponding to each frame of the to-be-processed images; performing multi-frame denoising processing on the non-motion region corresponding to the multiple frames of the to-be-processed images to obtain a denoised non-motion region; performing denoising processing on a target motion region in the motion region corresponding to the multiple frames of the to-be-processed images by using a preset denoising model to obtain a denoised motion region; and fusing the denoised motion region and the denoised non-motion region to obtain a processed image.

In some embodiments of the present disclosure, before performing denoising processing on a target motion region in the motion region corresponding to the multiple frames of the to-be-processed images by using a preset denoising model to obtain a denoised motion region, the method further comprises: performing image quality detection on the motion region corresponding to the multiple frames of the to-be-processed images to obtain image quality information corresponding to each motion region; and screening, from the motion region corresponding to the multiple frames of the to-be-processed images, one motion region that meets a predetermined image quality condition as the target motion region.

In some embodiments of the present disclosure, the screening, from the motion region corresponding to the multiple frames of the to-be-processed images, one motion region that meets a predetermined image quality condition as the target motion region comprises: sorting the motion region corresponding to the multiple frames of the to-be-processed images according to the image quality information in an order from high to low; and selecting a motion region ranked first according to the sorting to obtain the target motion region.

In some embodiments of the present disclosure, the screening, from the motion region corresponding to the multiple frames of the to-be-processed images, one motion region that meets a predetermined image quality condition as the target motion region comprises: obtaining image quality information of the denoised non-motion region; performing analysis processing based on the image quality information of the denoised non-motion region and the image quality information of the motion region corresponding to the multiple frames of the to-be-processed images to obtain an image quality matching degree between the denoised non-motion region and each motion region; and screening, based on the image quality matching degree between the denoised non-motion region and each motion region, a motion region whose image quality matching degree meets a predetermined matching condition as the target motion region.

In some embodiments of the present disclosure, the performing analysis processing based on the image quality information of the denoised non-motion region and the image quality information of the motion region corresponding to the multiple frames of the to-be-processed images to obtain the image quality matching degree between the denoised non-motion region and each motion region comprises: calculating, based on the image quality information of the denoised non-motion region, a first image quality score of the denoised non-motion region; calculating, based on the image quality information of the motion region corresponding to each frame of the to-be-processed images, a second image quality score of the motion region corresponding to each frame of the to-be-processed images; and calculating a difference between the first image quality score of the denoised non-motion region and the second image quality score of the motion region corresponding to each frame of the to-be-processed images to obtain the image quality matching degree between the denoised non-motion region and each motion region.

In some embodiments of the present disclosure, the screening, based on the image quality matching degree between the denoised non-motion region and each motion region, a motion region whose image quality matching degree meets a predetermined matching condition as the target motion region comprises: determining, based on the image quality matching degree between the denoised non-motion region and each motion region, whether there exists an image quality matching degree within a predetermined matching interval; and if yes, determining, according to the motion region corresponding to the image quality matching degree within the predetermined matching interval, the target motion region.

In some embodiments of the present disclosure, the performing denoising processing on the target motion region in the motion region corresponding to the multiple frames of the to-be-processed images by using a preset denoising model to obtain the denoised motion region comprises one of the following: inputting the target motion region into a first denoising model to obtain the denoised motion region; or inputting the target motion region and the image quality information of the denoised non-motion region into a second denoising model to obtain the denoised motion region.

Those skilled in the art can understand that all or part of the steps in the methods of the above embodiments may be implemented by a computer program, or may be implemented by controlling related hardware by a computer program. The computer program may be stored in a computer-readable storage medium and loaded and executed by a processor.

Accordingly, the embodiments of the present disclosure further provide a storage medium, in which a computer program is stored, wherein the computer program can be loaded by a processor to execute the steps of any one of the methods provided in the embodiments of the present disclosure.

The storage medium may be a computer-readable storage medium, and may include: a read-only memory (ROM), a random access memory (RAM), a magnetic disk, or an optical disk, and the like.

Since the computer program stored in the storage medium can execute the steps of any one of the methods provided in the embodiments of the present disclosure, the beneficial effects achieved by the methods provided in the embodiments of the present disclosure can be realized. For details, reference may be made to the foregoing embodiments, and details are not repeated herein.

Those skilled in the art, after considering the specification and practicing the embodiments disclosed herein, will readily conceive of other embodiments of the present disclosure. The present disclosure is intended to cover any variations, uses, or adaptations of the present disclosure that follow the general principles of the present disclosure and include common general knowledge or conventional technical means in the art that are not disclosed in the present disclosure.

It should be understood that the present disclosure is not limited to the embodiments described above and illustrated in the drawings, and various modifications and changes may be made without departing from the scope of the present disclosure.

## Claims

1. A method for image processing, comprising:
segmenting multiple frames of to-be-processed images to obtain, for each frame of the to-be-processed images, a motion region and a non-motion region corresponding to each frame of the to-be-processed images;
performing multi-frame denoising processing on the non-motion region corresponding to the multiple frames of the to-be-processed images to obtain a denoised non-motion region;
performing denoising processing on a target motion region in the motion region corresponding to the multiple frames of the to-be-processed images by using a preset denoising model to obtain a denoised motion region; and
fusing the denoised motion region and the denoised non-motion region to obtain a processed image.

2. The method according to claim 1, wherein, before performing the denoising processing on the target motion region in the motion region corresponding to the multiple frames of the to-be-processed images by using the preset denoising model to obtain the denoised motion region, the method further comprises:
performing image quality detection on the motion region corresponding to the multiple frames of the to-be-processed images to obtain image quality information corresponding to each motion region; and
screening, from the motion region corresponding to the multiple frames of the to-be-processed images, one motion region that meets a predetermined image quality condition as the target motion region.

3. The method according to claim 2, wherein the screening, from the motion region corresponding to the multiple frames of the to-be-processed images, one motion region that meets the predetermined image quality condition as the target motion region comprises:
sorting the motion region corresponding to the multiple frames of the to-be-processed images according to the image quality information in an order from high to low; and
selecting a motion region ranked first according to the sorting to obtain the target motion region.

4. The method according to claim 2, wherein the screening, from the motion region corresponding to the multiple frames of the to-be-processed images, one motion region that meets the predetermined image quality condition as the target motion region comprises:
obtaining image quality information of the denoised non-motion region;
performing analysis processing based on the image quality information of the denoised non-motion region and the image quality information of the motion region corresponding to the multiple frames of the to-be-processed images to obtain an image quality matching degree between the denoised non-motion region and each motion region; and
screening, based on the image quality matching degree between the denoised non-motion region and each motion region, a motion region whose image quality matching degree meets a predetermined matching condition as the target motion region.

5. The method according to claim 4, wherein the performing analysis processing based on the image quality information of the denoised non-motion region and the image quality information of the motion region corresponding to the multiple frames of the to-be-processed images to obtain the image quality matching degree between the denoised non-motion region and each motion region comprises:
calculating, based on the image quality information of the denoised non-motion region, a first image quality score of the denoised non-motion region;
calculating, based on the image quality information of the motion region corresponding to each frame of the to-be-processed images, a second image quality score of the motion region corresponding to each frame of the to-be-processed images; and
calculating a difference between the first image quality score of the denoised non-motion region and the second image quality score of the motion region corresponding to each frame of the to-be-processed images to obtain the image quality matching degree between the denoised non-motion region and each motion region.

6. The method according to claim 4, wherein the screening, based on the image quality matching degree between the denoised non-motion region and each motion region, the motion region whose image quality matching degree meets the predetermined matching condition as the target motion region comprises:
determining, based on the image quality matching degree between the denoised non-motion region and each motion region, whether there exists an image quality matching degree within a predetermined matching interval; and
in an event that there exists the image quality matching degree within the predetermined matching interval, determining the target motion region according to the motion region corresponding to the image quality matching degree within the predetermined matching interval.

7. The method according to claim 1, wherein the performing denoising processing on the target motion region in the motion region corresponding to the multiple frames of the to-be-processed images by using the preset denoising model to obtain the denoised motion region comprises one of the following:
inputting the target motion region into a first denoising model to obtain the denoised motion region; or
inputting the target motion region and the image quality information of the denoised non-motion region into a second denoising model to obtain the denoised motion region.

8. The method according to claim 1, wherein the performing multi-frame denoising processing on the non-motion region corresponding to the multiple frames of the to-be-processed images to obtain the denoised non-motion region comprises:
aligning the non-motion region corresponding to the multiple frames of the to-be-processed images to obtain a pixel correspondence relationship among multiple non-motion regions; and
performing weighted averaging on corresponding pixels among the multiple non-motion regions according to the correspondence relationship to obtain one denoised non-motion region.

9. The method according to claim 1, wherein, before performing the denoising processing on the target motion region, the method further comprises:
randomly selecting one motion region from the motion region corresponding to the multiple frames of the to-be-processed images as the target motion region.

10. The method according to claim 1, wherein, before performing the denoising processing on the target motion region, the method further comprises:
selecting, from the motion region corresponding to the multiple frames of the to-be-processed images, one motion region closest to a center of the to-be-processed images as the target motion region.

11. The method according to claim 5, wherein the calculating, based on the image quality information of the denoised non-motion region, the first image quality score of the denoised non-motion region comprises:
calculating a weighted sum of multi-dimensional information in the image quality information of the denoised non-motion region, and using the weighted sum as the first image quality score of the denoised non-motion region.

12. The method according to claim 6, wherein the determining, according to the motion region corresponding to the image quality matching degree within the predetermined matching interval, the target motion region comprises:
in an event that the motion region corresponding to the image quality matching degree within the predetermined matching interval is one, using the motion region as the target motion region; and
in an event that the motion region corresponding to the image quality matching degree within the predetermined matching interval is at least two, using a motion region corresponding to a maximum image quality matching degree as the target motion region.

13. An image processing apparatus, comprising:
a segmentation module, configured to segment multiple frames of to-be-processed images to obtain, for each frame of the to-be-processed images, a motion region and a non-motion region corresponding to each frame of the to-be-processed images;
a first denoising module, configured to perform multi-frame denoising processing on the non-motion region corresponding to the multiple frames of the to-be-processed images to obtain a denoised non-motion region;
a second denoising module, configured to perform denoising processing on a target motion region in the motion region corresponding to the multiple frames of the to-be-processed images by using a preset denoising model to obtain a denoised motion region; and
a fusion module, configured to fuse the denoised motion region and the denoised non-motion region to obtain a processed image.

14. The apparatus according to claim 13, wherein, before the second denoising module performs the denoising processing on the target motion region in the motion region corresponding to the multiple frames of the to-be-processed images by using the preset denoising model to obtain the denoised motion region, the apparatus further comprises a screening module, configured to:
perform image quality detection on the motion region corresponding to the multiple frames of the to-be-processed images to obtain image quality information corresponding to each motion region; and
screen, from the motion region corresponding to the multiple frames of the to-be-processed images, one motion region that meets a predetermined image quality condition as the target motion region.

15. The apparatus according to claim 14, wherein the screening module is configured to:
sort the motion region corresponding to the multiple frames of the to-be-processed images according to the image quality information in an order from high to low; and
select a motion region ranked first according to the sorting to obtain the target motion region.

16. The apparatus according to claim 14, wherein the screening module is configured to:
obtain image quality information of the denoised non-motion region;
perform analysis processing based on the image quality information of the denoised non-motion region and the image quality information of the motion region corresponding to the multiple frames of the to-be-processed images to obtain an image quality matching degree between the denoised non-motion region and each motion region; and
screen, based on the image quality matching degree between the denoised non-motion region and each motion region, a motion region whose image quality matching degree meets a predetermined matching condition as the target motion region.

17. The apparatus according to claim 16, wherein the screening module is configured to:
calculate, based on the image quality information of the denoised non-motion region, a first image quality score of the denoised non-motion region;
calculate, based on the image quality information of the motion region corresponding to each frame of the to-be-processed images, a second image quality score of the motion region corresponding to each frame of the to-be-processed images; and
calculate a difference between the first image quality score of the denoised non-motion region and the second image quality score of the motion region corresponding to each frame of the to-be-processed images to obtain the image quality matching degree between the denoised non-motion region and each motion region.

18. The apparatus according to claim 16, wherein the screening module is configured to:
determine whether there exists an image quality matching degree within a predetermined matching interval, based on the image quality matching degree between the denoised non-motion region and each motion region; and
in an event that there exists the image quality matching degree within the predetermined matching interval, determine the target motion region according to the motion region corresponding to the image quality matching degree within the predetermined matching interval.

19. A storage medium storing computer program executable by a processor of a computer to perform the method according to any one of claims 1 to 12.

20. An electronic device, comprising:
a memory storing computer program; and
a processor configured to read the computer program to perform the method according to any one of claims 1 to 12.
